# EUROPEAN PATENT APPLICATION

(11) **EP 4 814 756 A1**
(43) Date of publication of application: **30.09.2026**
(21) Application number: 25196579.4
(22) Date of filing: 19.08.2025
(51) Int. Cl.: G06F 16/958

(54) **INFORMATION PROCESSING SYSTEM, PROGRAM, AND METHOD**

(30) Priority: 24.03.2025 JP 2025048935
(71) Applicant: Fujifilm Business Innovation Corp., Tokyo 107-0052 (JP)
(72) Inventor: NOMA, Tomohiro, Yokohama (JP); YOSHIDA, Maiko, Yokohama (JP); YAMADA, Norikazu, Ebina (JP); SHIRAISHI, Yukihiro, Yokohama (JP); YAMAZAKI, Shinya, Yokohama (JP)
(74) Representative: Meissner Bolte Partnerschaft mbB

(57) **Abstract**

An information processing system includes a processor configured to obtain identification information for identifying a website and a parameter relating to the website and inputting input information including the identification information and the parameter to a learning model and presenting a measure to improve the parameter, the measure being output from the learning model.

## Description

### Background

### (i) Technical Field

The present disclosure relates to an information processing system, a program, and a method.

### (ii) Related Art

There are techniques for analyzing viewing logs of webpages and presenting parameters that contribute to improvement in viewing (e.g., refer to Japanese Unexamined Patent Application Publication No. 2025-7284).

### Summary

Examination of measures to address issues identified through analysis has become a bottleneck.

Accordingly, it is an object of the present disclosure to provide measures to improve proposed parameters that contribute to conversion improvement relating to a website unlike when only the parameters are presented.

According to a first aspect of the present disclosure, there is provided an information processing system including a processor configured to obtain identification information for identifying a website and a parameter relating to the website, and inputting input information including the identification information and the parameter to a learning model and presenting a measure to improve the parameter, the measure being output from the learning model.

According to a second aspect of the present disclosure, in the information processing system according to the first aspect, the processor is configured to obtain information regarding conversion in the website, and the input information further includes the obtained information regarding the conversion.

According to a third aspect of the present disclosure, in the information processing system according to the second aspect, the input information includes information regarding a user flow for a web user who is visiting the website to reach a specific item in the website relating to the conversion.

According to a fourth aspect of the present disclosure, in the information processing system according to the third aspect, the processor is configured to obtain an action history of the web user who is visiting the website, and the information regarding the user flow is extracted on a basis of the action history.

According to a fifth aspect of the present disclosure, in the information processing system according to any one of the first to fourth aspects, the processor is configured to obtain an action history of a web user who is visiting the website and conversion in the website, obtain, on a basis of the action history and the conversion, a parameter more highly correlated with the conversion than other parameters among a plurality of the parameters relating to the website, and include the obtained parameter in the input information.

According to a sixth aspect of the present disclosure, in the information processing system according to fifth aspect, the processor is configured to obtain, on the basis of the action history and the conversion, a plurality of parameters more highly correlated with the conversion than other parameters among the plurality of parameters relating to the website, present the plurality of obtained parameters, and include a selected one of the plurality of obtained parameters in the input information.

According to a seventh aspect of the present disclosure, in the information processing system according to the first aspect, the input information further includes information regarding a type of website.

According to an eighth aspect of the present disclosure, in the information processing system according to the seventh aspect, the input information further includes information regarding a type of business relating to the website.

According to a ninth aspect of the present disclosure, in the information processing system according to the eighth aspect, the information regarding the type of information and the information regarding the type of business are changed in accordance with the obtained identification information.

According to a tenth aspect of the present disclosure, in the information processing system according to any one of the first to ninth aspects, the learning model is a language model, and the processor is configured to input a prompt including the input information to the language model and present the measure output from the language model.

According to an eleventh aspect of the present disclosure, in the information processing system according to the tenth aspect, the processor is configured to generate the prompt using, among a plurality of templates stored in a memory, a template selected on a basis of the input information.

According to a twelfth aspect of the present disclosure, in the information processing system according to the tenth aspect, the input information includes information that is a natural language description of content of the parameter.

According to a thirteenth aspect of the present disclosure, in the information processing system according to any one of the first to twelfth aspects, the processor is configured to input the input information to the learning model and present a factor of an issue that contributes to improvement of the parameter, the factor being output from the learning model.

According to a fourteenth aspect of the present disclosure, in the information processing system according to the thirteenth aspect, the processor is configured to present a plurality of the factors output from the learning model, and present the measure obtained by including, among the plurality of presented factors, a factor selected by a user in the input information and inputting the input information to the learning model.

According to a fifteenth aspect of the present disclosure, in the information processing system according to the thirteenth aspect, the processor is configured to present a plurality of the measures for the factor.

According to a sixteenth aspect of the present disclosure, in the information processing system according to any one of the first to fifteenth aspects, the processor is configured to present an evaluation result of the measure while associating the evaluation result with the measure.

According to a seventeenth aspect of the present disclosure, there is provided a program causing a computer to execute a process including obtaining identification information for identifying a website and a parameter relating to the website, and inputting input information including the identification information and the parameter to a learning model and presenting a measure to improve the parameter, the measure being output from the learning model.

According to an eighteenth aspect of the present disclosure, there is provided a method comprising: obtaining identification information for identifying a website and a parameter relating to the website; and inputting input information including the identification information and the parameter to a learning model and presenting a measure to improve the parameter, the measure being output from the learning model.

According to the first aspect of the present disclosure, measures to improve proposed parameters that contribute to conversion improvement relating to a website can be provided unlike when only the parameters are proposed.

According to the second aspect of the present disclosure, accuracy of measures to be presented can be increased.

According to the third aspect of the present disclosure, the accuracy of measures to be presented can be increased.

According to the fourth aspect of the present disclosure, measures to improve reaching to a specific item in a website can be presented.

According to the fifth aspect of the present disclosure, measures likely to improve reaching to a specific item in a website can be presented.

According to the sixth aspect of the present disclosure, measures according to a parameter selected by a user can be presented.

According to the seventh aspect of the present disclosure, measures to be output can reflect information regarding a type of website.

According to the eighth aspect of the present disclosure, measures to be output can reflect information regarding a type of business of a website.

According to the ninth aspect of the present disclosure, prompt injection by malicious users can be prevented.

According to the tenth aspect of the present disclosure, measures can be articulated and presented.

According to the eleventh aspect of the present disclosure, generation of a prompt can be automated.

According to the twelfth aspect of the present disclosure, the accuracy of measures to be presented can be increased.

According to the thirteenth aspect of the present disclosure, a user can check factors.

According to the fourteenth aspect of the present disclosure, measures can be presented for a factor selected by a user.

According to the fifteenth aspect of the present disclosure, a plurality of measures can be presented for one factor.

According to the sixteenth aspect of the present disclosure, not only measures but also evaluation thereof can be checked.

According to the seventeenth aspect of the present disclosure, measures to improve proposed parameters that contribute to conversion improvement relating to a website can be provided unlike when only the parameters are proposed.

According to the eighteenth aspect of the present disclosure, measures to improve proposed parameters that contribute to conversion improvement relating to a website can be provided unlike when only the parameters are proposed.

### Brief Description of the Drawings

Exemplary embodiments of the present disclosure will be described in detail based on the following figures, wherein:
Fig. 1 is a diagram illustrating an example of configuration of an information processing system assumed in a first exemplary embodiment;
Fig. 2 is a diagram illustrating an example of hardware configuration of a business support server;
Fig. 3 is a diagram illustrating an example of hardware configuration of an information terminal;
Fig. 4 is a diagram illustrating parameters relating to conversion of a webpage;
Fig. 5 is a flowchart illustrating an example of an operation for extracting parameters that contribute to conversion improvement;
Fig. 6 is a diagram illustrating an example of an action history of web users;
Fig. 7 is a diagram illustrating an example of an action history after grouping;
Fig. 8 is a diagram illustrating an example of a screen displaying top N actions with highest degrees of contribution to conversion;
Fig. 9 is a diagram illustrating an example of a screen used to input a simulation condition and display a simulation result;
Fig. 10 is a flowchart illustrating an example of a processing operation performed until measures to improve parameters that contribute to conversion improvement are presented;
Fig. 11 is a diagram illustrating a relationship between the processing operation illustrated in Fig. 10 and inputs and outputs of a learning model;
Fig. 12 is a diagram illustrating an example of a screen displaying issues (i.e., actions) that contribute to conversion improvement;
Fig. 13 is a diagram illustrating an example of types of business, types of site, and conversion categories;
Fig. 14 is a diagram illustrating an example of a screen used to input information used to generate a prompt;
Fig. 15 is a diagram illustrating an example of generated candidates for a type of business displayed in a pull-down menu according to a type of website;
Fig. 16 is a diagram illustrating an example of generated candidates for a site displayed in a pull-down menu according to the type of website;
Fig. 17 is a diagram illustrating an example of generated candidates for a conversion (CV) category displayed in a pull-down menu;
Fig. 18 is a diagram illustrating an example of input information used to generate a prompt;
Fig. 19 is a diagram illustrating an example of a prompt used as "input 21";
Fig. 20 is a diagram illustrating an example of a prompt used to generate a label of an issue;
Fig. 21 is a diagram illustrating an example of a screen displaying factor hypotheses of an issue (i.e., action) that contributes to conversion improvement;
Fig. 22 is a diagram illustrating a specific example of a content field;
Fig. 23 is a diagram illustrating another specific example of the content field;
Fig. 24 is a diagram illustrating an example of a prompt used as "input 31";
Fig. 25 is a diagram illustrating an example of a screen displaying measures to improve the actions that contribute to conversion improvement;
Fig. 26 is a diagram illustrating an example of output measure proposals;
Fig. 27 is a diagram illustrating another example of the prompt used as "input 31";
Fig. 28 is a diagram illustrating another example of the output measure proposals; and
Fig. 29 is a diagram illustrating another relationship between the processing operation illustrated in Fig. 10 and the inputs and outputs of the learning model.

### Detailed Description

Exemplary embodiments of the present disclosure will be described hereinafter with reference to the drawings.

### Terms

A "website" refers to one webpage or a group of webpages.

A "top page" refers to an entry webpage of a website. The top page is also called a homepage.

"Identification information" refers to information for identifying a website, and includes, for example, not only a uniform resource locator (URL) but also images of the website, HyperText Markup Language (HTML) data, and the like.

"Parameters relating to a website" include, for example, conversion, issues (i.e., actions) that contribute to conversion improvement, and an action history of web users.

"Conversion" refers to a state where a web user who has visited a website has performed one of specific actions. The specific actions include, for example, membership registration, newsletter subscription, product purchase, inquiry, downloading, application, reservation, transition to a specific page, access to a top page, bounce from the top page, access to a landing page, information request, adding to favorites, and purchase from a shopping cart. The conversion and the specific actions relating thereto can vary depending on a website, a type of business, and a client.

Note that the conversion includes not only cases where web users perform a specific action without leaving a target website, but also cases where web users temporarily leave the target site and later return to perform the specific action.

The specific actions include use of specific items. The specific items include, for example, a registration button, a purchase button, an inquiry button, a download button, an application button, a reservation button, and a transition button for transitioning to a specific page.

The conversion may include actions performed before completion of downloading, application, reservation, and the like. Such actions include, for example, an action resulting in displaying a download page before completion of downloading, an action resulting in displaying an application page or a reservation page before completion of application or reservation, an action resulting in displaying a screen for confirming input content.

A "conversion rate" refers to percentage of web users who have converted among all web users who have visited a website.

"Information regarding conversion" includes, for example, the number of entries, the number of exits, the number of transitions, the number of inter-page transitions, the number of referrers, and the number of accesses.

The "number of entries" includes, for example, the number of users who have visited a specific website from external URLs. The number of visits is, for example, the number of entries into a top page.

The "number of exits" refers to, for example, the number of exits from a specific URL.

The "number of transitions" refers to, for example, a total number of transitions in a website or an application from a webpage or a screen to another webpage or screen. The number of transitions includes also includes transitions within the same webpage (e.g., reloading) and transitions to external websites. That is, the number of transitions indicates an overall number of transitions. The number of transitions is used as an indicator indicating a level of user engagement across an entire website or application.

The "number of inter-page transitions" refers to the number of transitions of web users between two specific webpages. For example, the "number of inter-page transitions" assumes transitions between specific pages, such as the "number of transitions from a top page to a product page". The number of inter-page transitions is used as an indicator indicating how effectively a specific user flow functions and to what extent web users navigate a website or an application as intended.

The "number of referrers" includes, for example, the number of pieces of data indicating pages from which web users who have accessed a specific website have come. The number of pieces of data here includes, for example, the number of visits from search engines.

The "number of accesses" refers to, for example, the number of accesses to a specific website in a specific time period.

These parameters are obtained, for example, from an action history of web users who have visited a website.

An "action history" includes, for example, a viewing history of a specific website and information regarding user flows leading web users to the specific website. The information regarding the user flows can be extracted from a history of websites viewed by web users and histories of other actions.

### First Exemplary Embodiment

### System Configuration

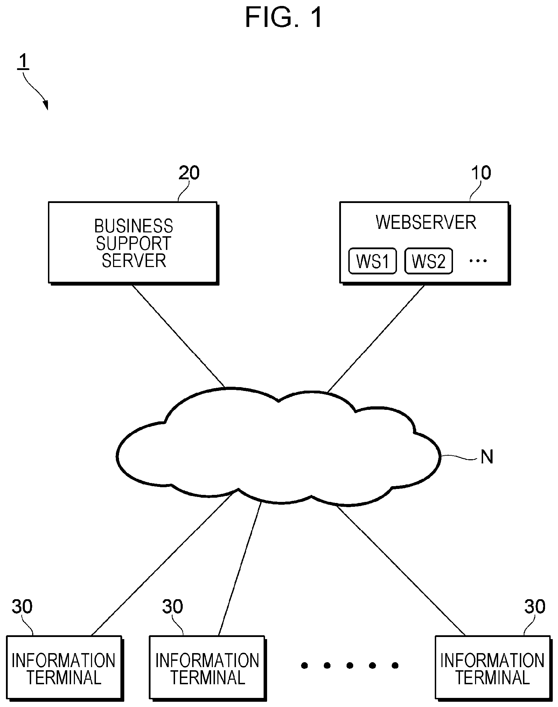

Fig. 1 is a diagram illustrating an example of configuration of an information processing system 1 assumed in a first exemplary embodiment. The information processing system 1 illustrated in Fig. 1 includes a webserver 10, a server (hereinafter referred to as a "business support server") 20 that provides a service for supporting conversion improvement relating to websites, information terminals 30, and a network N.

The webserver 10 is a computer that displays an accessed website on a web browser as a client in response to a request from the web browser. In Fig. 1, websites to be provided are denoted by WS1, W2, and so on.

In Fig. 1, a web browser is installed on at least one of the information terminals 30. The information terminals 30 on which the web browser is installed will be referred to as browsing terminals. In the present exemplary embodiment, users who operate the browsing terminals will be referred to as web users.

The webserver 10 stores the web users' browsing histories of webpages. The webserver 10 is an example of a terminal connected to the network N.

The business support server 20 is a computer that provides parameters that contribute to conversion improvement set for a specific website and measures to improve the parameters. In the present exemplary embodiment, "contribute to conversion improvement" is also referred to as "highly corrected with conversion".

In the present exemplary embodiment, "conversion improvement" refers to increases in values of actions relating to conversion.

When decreases in values indicate conversion improvement, however, "conversion improvement" refers to the decreases in the values of actions relating to conversion.

In Fig. 1, the business support server 20 is operated from at least one of the information terminals 30.

In the present exemplary embodiment, the information terminals 30 used to access the business support server 20 will be referred to as business terminals. As users who operate the business terminals, engineers who analyze issues (hereinafter also referred to as "actions") that contribute to conversion improvement and measures to contribute to improvement in the issues, employees of business entities that manage websites, and the like are assumed.

In the present exemplary embodiment, the engineers, the employees, and the like will be referred to as "site administrators".

The business support server 20 is another example of the terminal connected to the network N.

The information terminals 30 are, for example, desktop computers, laptop computers, tablet computers, and smartphones.

There may be one or a plurality of information terminals 30 that operates as client terminals operated by the web users and one or a plurality of information terminals 30 that operates as client terminals operated by the site administrators.

The network N is, for example, the Internet, a wireless local area network (LAN), 4G, 5G, or another mobile communication system.

Fig. 1 illustrates an example in which the webserver 10, the business support server 20, and the information terminals 30 are connected to a single network N. A network N used to browse webpages, however, may be different from a network N used to access the business support server 20.

### Hardware Configuration of Server

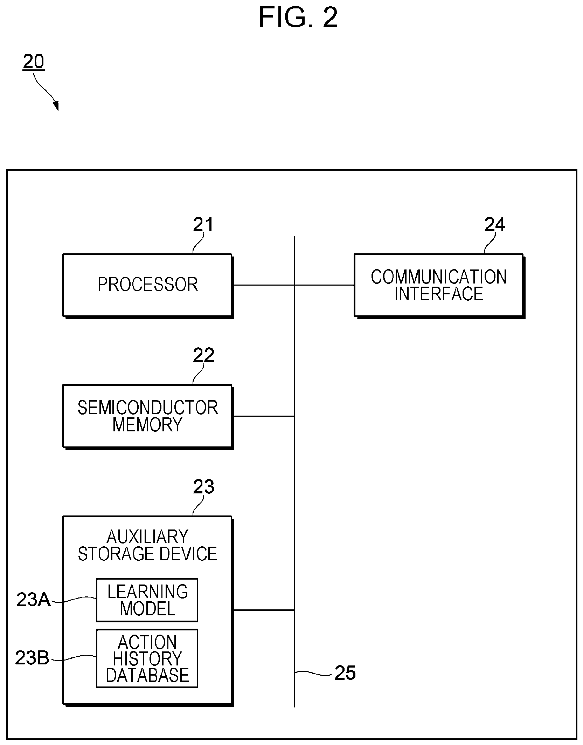

Fig. 2 is a diagram illustrating an example of hardware configuration of the business support server 20.

The business support server 20 illustrated in Fig. 2 includes a processor 21, a semiconductor memory 22, an auxiliary storage device 23, and a communication interface 24. These devices are connected to one another via a signal line 25 such as a bus.

The processor 21 is a device that achieves various functions by executing a program. The semiconductor memory 22 may include, for example, a read-only memory (ROM) storing a unified extensible firmware interface (UEFI) and the like and a random-access memory (RAM) used as a work area of the processor 21.

The processor 21 and the semiconductor memory 22 function as a so-called computer.

The auxiliary storage device 23 is implemented as, for example, a hardware device or a semiconductor storage. The auxiliary storage device 23 stores programs and various types of data. The "programs" are collective terms of an operating system (OS) and application programs.

The auxiliary storage device 23 also stores, as a subset of the programs, a program for presenting parameters that contribute to conversion improvement, a program for presenting factors of the parameters, and a program for presenting measures according to the factors.

The auxiliary storage device 23 also stores a learning model 23A used by each program. The learning model 23A in the present exemplary embodiment is a large language model (LLM). The LLM is an example of a generative AI specialized in natural language processing.

The auxiliary storage device 23 also stores templates of prompts used to generate an action history database 23B of the web users, measures, and the like. The auxiliary storage device 23 is an example of a memory.

The communication interface 24 is an interface for communicating with the information terminals 30 that access information for supporting business via the network N. The communication interface 24 is compatible with various communication standards. The communication standards here include, for example, Ethernet (registered trademark), Wi-Fi (registered trademark), and a mobile communication system.

The hardware configuration of the webserver 10 (see Fig. 1) is the same as the business support server 20 except for data and programs stored in an auxiliary storage device.

### Hardware Configuration of Information Terminal

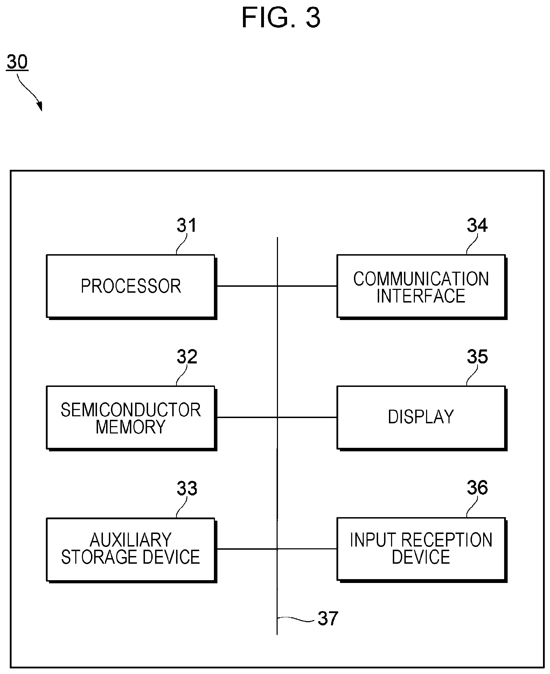

Fig. 3 is a diagram illustrating an example of hardware configuration of each information terminal 30.

The hardware configuration of the information terminal 30 illustrated in Fig. 3 is substantially the same as that of the business support server 20 (see Fig. 2).

That is, the information terminal 30 includes a processor 31, a semiconductor memory 32, an auxiliary storage device 33, a communication interface 34, a display 35, and an input reception device 36. These devices are connected to one another via a signal line 37 such as a bus.

The display 35 is, for example, a liquid crystal display or an organic electroluminescent (EL) display.

The input reception device 36 is, for example, a mouse and a keyboard. When the information terminal 30 is a laptop computer, a tablet computer, or a smartphone, a capacitive touch sensor having transparency that does not obstruct visibility of images displayed on the display 35 is used as the input reception device 36. This type of device obtained by combining a touch sensor and a display is called a touch panel.

### Parameters Relating to Conversion of Webpage

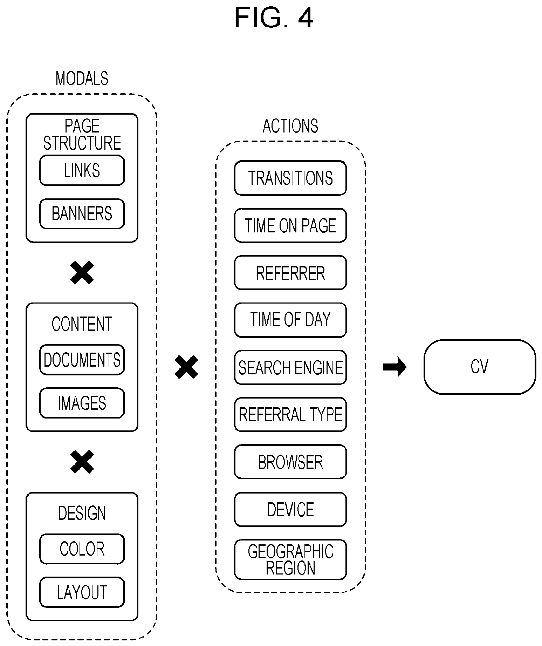

Fig. 4 is a diagram illustrating parameters relating to conversion of a webpage. Conversion is abbreviated as "CV" in Fig. 4.

As illustrated in Fig. 4, conversion relates to a combination of "modals" and "actions". In Fig. 4, combinations of information are indicated by signs "X".

The "modals" are information that gives features of a webpage, and include, for example, a combination of a page structure, content, and design.

In Fig. 4, "links" and "banners" are illustrated as the page structure. The links are information connecting webpages, and are also called "hyperlinks". The banners are information that introduces other websites and other webpages in the same website. Many batters are provided with a link to a website or a webpage to be introduced.

In Fig. 4, "documents" and "images" are illustrated as the content. The documents include text described in HTML or the like and style sheets. The images include still images and moving images.

In Fig. 4, "color" and "layout" are illustrated.

The "actions" are information relating to operations of users who view a webpage. In Fig. 4, examples of the actions include transitions, time on page, referrers, time periods of the day, search engines, reference types, browsers, devices, and geographic regions.

The transitions include page transitions and inter-page transitions. The page transitions are information indicating transitions to a specific webpage. Webpages from which the web users transition need not necessarily exist.

The time on page is a period of time for which the web users have stayed on a specific webpage. In other words, the time on page is a period of time for which the web users have viewed the specific webpage.

The referrers are information indicating webpages from which the web users have transitioned to a specific webpage by clicking links.

The time periods of the day are information indicating time periods of the day when a specific webpage has been displayed.

The search engines are information indicating names of search engines or the like used to refer to a specific webpage.

The reference types are information indicating types of method used to refer to a specific webpage. The reference types include, for example, a search engine, a direct input of a URL, and a click on a bookmark.

The browsers are information indicating web browsers used to display specific webpages. The devices are information indicating types of information terminal 30 used by users who have referred to a webpage.

The geographic regions are information indicating positions of information terminals 30 on which web browsers operate. The positions here are not limited to ones measured by positioning systems, and may be estimated positions. The positions are not limited to physical positions, and may be logical positions in a network.

When databases that manage information (hereinafter referred to as "user information") regarding users who operate the information terminals 30 used to view a webpage can be accessed, information relating to conversion to a specific webpage may include user information regarding the web users, such as age, gender, and addresses.

There are an enormous number of combinations of the pieces of information described above. It is therefore not easy to estimate actions strongly associated with conversion to a specific webpage on the basis of experience and skills of the site administrators.

### Extraction of Parameters That Contribute to Conversion Improvement

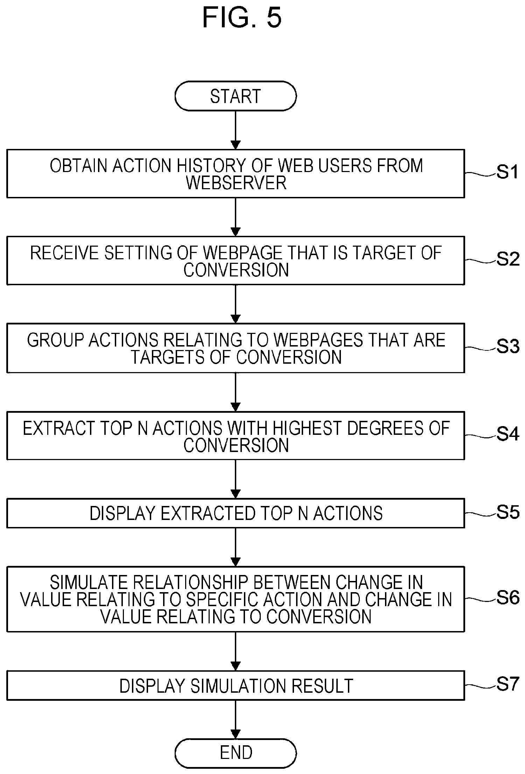

Fig. 5 is a flowchart illustrating an example of an operation for extracting parameters that contribute to conversion improvement. The parameters to be extracted will be referred to as "issues that contribute to conversion improvement" and "actions that contribute to conversion improvement".

Signs "S" in the drawings mean steps. The processing operation illustrated in Fig. 5 is achieved by executing a program using the processor 21 (see Fig. 2).

In the present exemplary embodiment, the processing operation illustrated in Fig. 5 is started when, for example, a site administrator accesses the business support server 20.

### Step 1

First, the processor 21 obtains the action history database 23B (see Fig. 2) of the web users from the webserver 10 (step 1). The action history of the web users is stored in the webserver 10 (see Fig. 1) as so-called browsing logs and copied to the auxiliary storage device 23 (see Fig. 2) of the business support server 20.

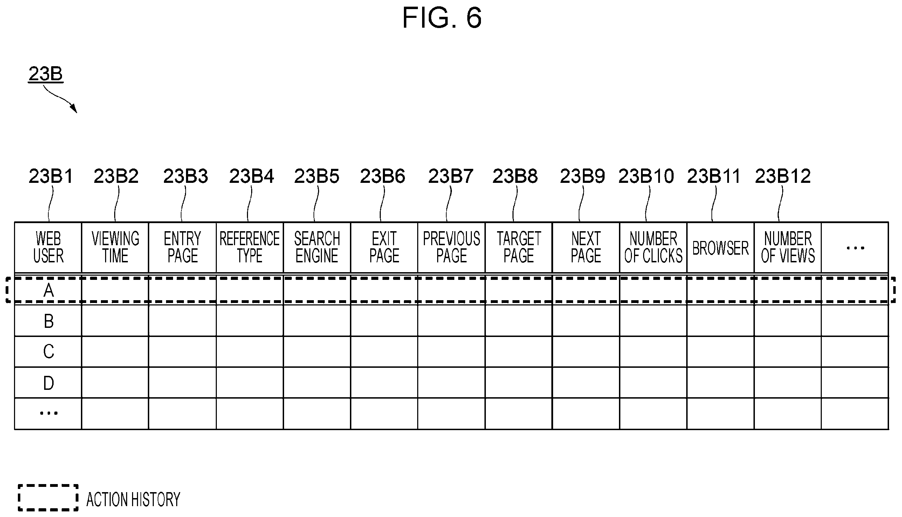

Fig. 6 is a diagram illustrating an example of the action history of web users 23B1.

In Fig. 6, a web user 23B1, a viewing time 23B2, an entry page 23B3, a reference type 23B4, a search engine 23B5, an exit page 23B6, a previous page 23B7, a target page 23B8, a next page 23B9, the number of clicks 23B10, a browser 23B11, and the number of views 23B12 are illustrated as actions included in the action history.

In Fig. 6, each of rows corresponds to one of viewing records of one of the web users 23B1 (e.g., A, B, C, and the like) in the action history. Viewing records of the same web user 23B1, therefore, appear in a plurality of rows of the action history. Each column is one of the actions included in the action history. In Fig. 6, web users 23B1 corresponding to viewing records are shown in the action history in order to describe correspondences. The same holds for other drawings.

The web user 23B1 is information for identifying a user who has viewed a specific webpage. As the web user 23B1, for example, a user account is stored. Alternatively, as the web user 23B1, an Internet protocol (IP) address of the information terminal 30 (see Fig. 1) used to view the webpage may be stored.

As the viewing time 23B2, information regarding a time when a specific webpage has been viewed is stored.

As the entry page 23B3, information regarding a webpage first accessed by a web user during a series of inter-page transitions is stored.

As the reference type 23B4, information indicating types of method used to refer to a specific webpage is stored. The method used to refer to a specific webpage include, for example, a search engine, a direct input of a URL, a click on a bookmark.

As the search engine 23B5, information indicating a name of a search engine or the like used to refer to a specific webpage is stored.

As the exit page 23B6, information regarding a webpage last accessed by a web user during a series of page transitions is stored.

As the previous page 23B7, information indicating a webpage viewed immediately before a transition to a specific webpage is stored.

As the target page 23B8, information indicating a specific webpage is stored.

As the next page 23B9, information indicating a webpage to which a web user has transitioned from a specific webpages is stored.

As the number of clicks 23B10, information indicating the number of clicks by the web user 23B1 during a series of page transitions is stored.

As the browser 23B11, information indicating a names of a browser or the like used by a web user to view a webpage is stored.

As the number of views 23B12, information indicating the number of views of a webpage by a web user is stored.

### Steps 2 and 3

Next, the processor 21 receives setting of a webpage that is a target of conversion (step 2). Specifically, specification of a webpage that is a target of conversion is received from the information terminal 30 operated by the site administrator.

Next, the processor 21 groups actions relating to the webpage that is the target of conversion (step 3). In the grouping, the actions relating to the webpage that is the target of conversion are combined together for each web user 23B1.

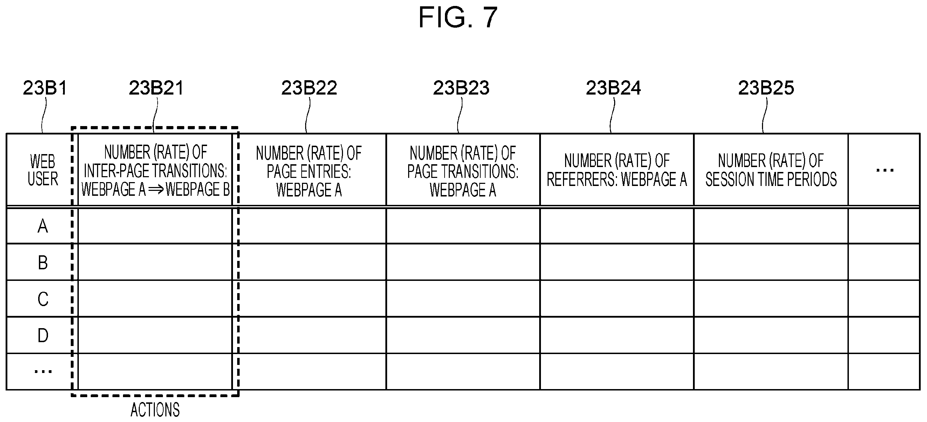

Fig. 7 is a diagram illustrating an example of an action history after the grouping. Parts of Fig. 7 corresponding to parts of Fig. 6 are given corresponding reference signs.

The actions in the action history illustrated in Fig. 7 are organized actions relating to the webpage that is the target of conversion. In Fig. 7, a web user 23B1, the number (rate) of inter-page transitions 23B21, the number (rate) of page entries 23B22, the number (rate) of page transitions 23B23, the number (rate) of referrers 23B24, and the number (rate) of session time periods 23B25 are illustrated as the actions included in the action history.

The number (rate) of inter-page transitions 23B21 is information regarding the number of transitions from webpage A to webpage B for each of browsing users or a rate of transitions obtained by dividing the number of transitions by the number of sessions.

The number (rate) of page entries 23B22 is information regarding the number of entries to webpage A for each web user 23B1 or a rate of page entries obtained by dividing the number of entries by the number of sessions.

The number (rate) of page transitions 23B23 is information regarding the number of transitions to webpage A for each web user 23B1 or a rate of transitions obtained by dividing the number of transitions by the number of sessions.

The number (rate) of referrers 23B24 is information regarding the number of entries from webpage A as a referrer for each web user 23B1 or a rate of entries obtained by dividing the number of entries by the number of sessions.

The number (rate) of session time periods 23B25 is information regarding the number of session time periods for each web user 23B1 and a rate of time periods obtained by dividing the number of session time periods by the number of sessions.

### Step 4

Next, the processor 21 extracts top N actions with highest degrees of contribution to conversion (step 4). A degree of contribution is a value indicating a degree of probability that a specific action contributes to conversion.

In the present exemplary embodiment, the processor 21 arranges the actions (i.e., columns) illustrated in Fig. 7 in order of the degree of contribution, and extracts top N actions. Here, the top N actions are an example of parameters.

Here, N may be a fixed value, or may be specified by the site administrator. When the site administrator can specify N, the display 35 (see Fig. 3) of the information terminal 30 displays a field for specifying the number of actions to be extracted.

In the present exemplary embodiment, the value of the degree of contribution is updated on the basis of the following rule each time a new action record is obtained.

When a specific webpage is reached after one or a plurality of screen transitions, for example, "1" is added to the value of the degree of contribution of a related action, and when the specific webpage is not reached, for example, "1" is subtracted from the value of the degree of contribution of the related action.

As a result, the degree of contribution of an action likely to be contributing to conversion increases, and the degree of contribution of an action unlikely to be contributing to conversion decreases. For example, the degree of contribution of an action Y that appears 10 times in a history of transitions to webpage A becomes higher than that of an action X that appears only once.

The top N actions are thus extracted on the basis of the actions included in the action history and information indicating whether conversion is included in the action history.

### Step 5

Next, the processor 21 displays the extracted top N actions (step 5). Specifically, the top N actions are displayed on the display 35 of the information terminal 30 operated by the site administrator. As a result, the site administrator can recognize actions with high degrees of contribution to viewing of the webpage. In the present exemplary embodiment, the degree of contribution of each action is also displayed.

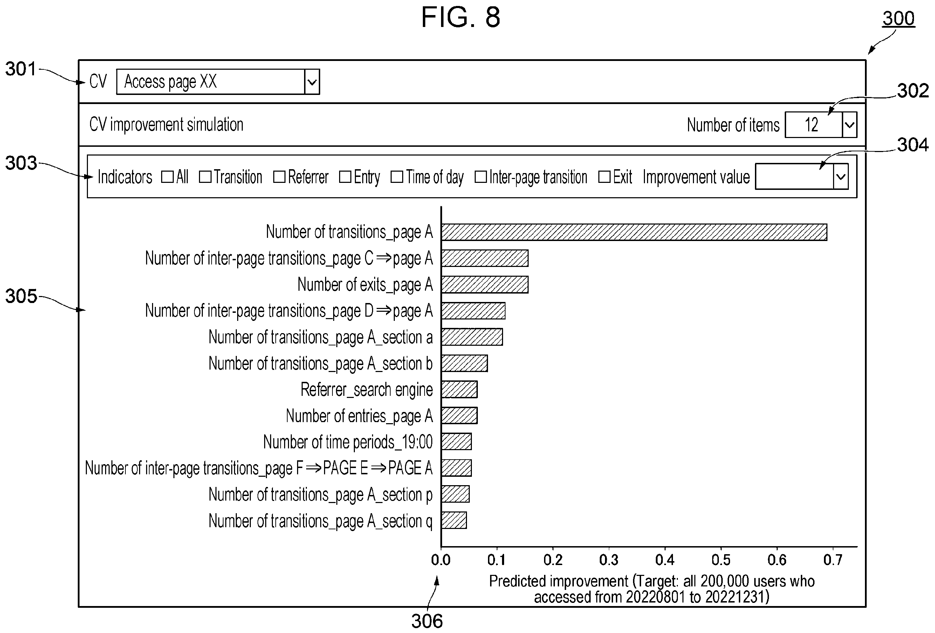

Fig. 8 is a diagram illustrating an example of a screen 300 for displaying the top N actions with high degrees of contribution to conversion. The screen 300 illustrated in Fig. 8 is displayed on the display 35 (see Fig. 3) of the information terminal 30 (see Fig. 1) operated by the site administrator.

The screen 300 illustrated in Fig. 8 includes input fields 301, 302, and 304, a specification field 303, a display field 305, and a total number field 306.

Content and the number of displayed items, however, are examples.

In Fig. 8, the input field 301 of conversion shows "access page XX". The page XX is webpage XX, which is, for example, "product list".

For the input field 301, a list of one or a plurality of webpages included in a website is prepared in advance. The list of one or a plurality of webpages is displayed by opening a pull-down menu.

The input field 302 of "number of items" is used to specify the number of items to be displayed as actions with high degrees of contribution to conversion. The number corresponds to N in steps 4 and 5 (see Fig. 5). In Fig. 8, "12" is input. "12" in Fig. 8 is an initial value. An engineer or the like, therefore, can change the number of items to be displayed.

In Fig. 8, the value in the input field 302 can be selected by opening a pull-down menu.

The specification field 303 of actions to be subjected to a simulation is used to specify one or a plurality of actions to be used for a simulation. In Fig. 8, a total of seven checkboxes corresponding to "all", "transition", "referrer", "entry", "time period of day", "inter-page transition", and "exit" are displayed. One or a plurality of checkboxes may be selected. When "all" is selected, the other six actions are also selected. Since Fig. 8 illustrates a state immediately after the top N actions are displayed, the checkboxes are not yet selected.

The input field 304 of an improvement value of a desired degree of improvement for a specified action is used to input a desired degree of improvement for a value relating to a selected action. Since Fig. 8 illustrates the state immediately after the top N actions are displayed, a value indicating the degree of improvement is not displayed.

The display field 305 of the top N actions shows the top N (12 in Fig. 8) actions extracted in step 4 (see Fig. 5). Degrees of contribution are shown in a right field of the top N actions by bar lengths in a bar chart.

It can be seen from Fig. 8 that the degree of contribution of "number of transitions_page A" is significantly higher than those of the other 11 actions.

The total number field 306 of browsing users indicates that a total of 200,000 browsing users have been analyzed and that a target period is five months from "20220801" to "20221231".

### Step 6

Next, the processor 21 simulates a relationship between a change in a value relating to a specific action and a change in a value relating to conversion (step 6).

### Step 7

In the present exemplary embodiment, a change in a value of conversion when a value relating to a specific action changes is simulated. For example, the amount of change in the value of conversion expected when the value relating to the specific action increases by 10% is calculated.

When the simulation ends, the processor 21 displays a simulation result (step 7). Specifically, the amount of change in the value relating to the specific action and the amount of change in the value of conversion are displayed on the display 35 of the information terminal 30 operated by the site administrator.

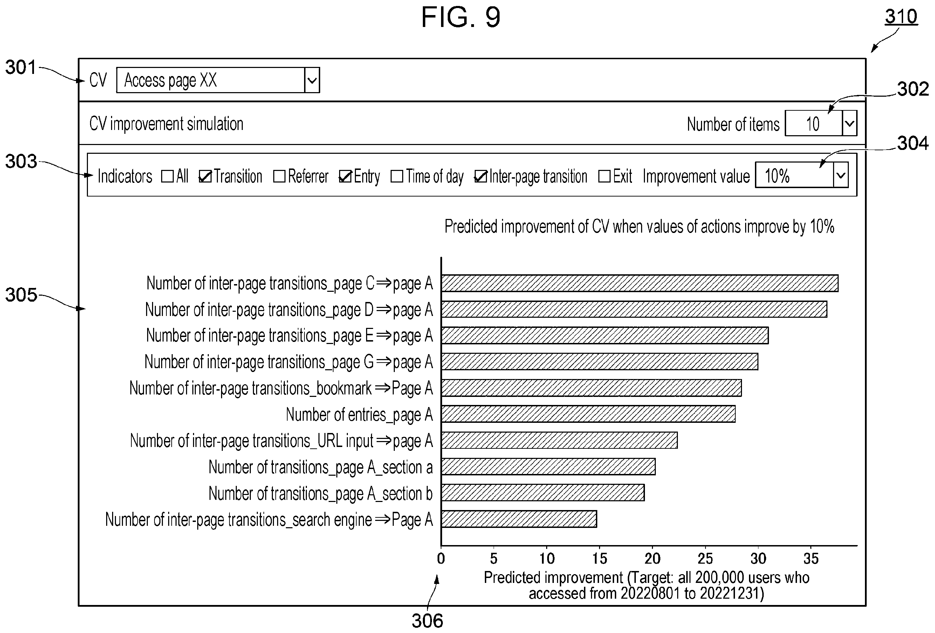

Fig. 9 is a diagram illustrating an example of a screen 310 used to input a simulation condition and display a simulation result. Parts of Fig. 9 corresponding to parts of Fig. 8 are given corresponding reference signs.

The screen 310 illustrated in Fig. 9 is also displayed on the display 35 (see Fig. 3) of the information terminal 30 (see Fig. 1) operated by the site administrator.

In Fig. 9, "10" is input to the input field 302 of "number of items". 10 actions that reflect the simulation result, therefore, are displayed in the display field 305 of the top N actions.

In Fig. 9, "transition", "entry", and "inter-page transition" are selected in the specification field 303 of actions, and "10%" is input in the input field 304 of the improvement value as a value indicating the degree of improvement.

As a result, a bar chart of predicted values of the degrees of improvement of conversion predicted for the actions is displayed in the display field 305 of the top N actions under a title of "predicted improvement of CV when values of actions improve by 10%".

It can be seen from Fig. 9 that when "number of inter-page transitions" from webpage C to webpage A increases by 10%, conversion to webpage XX increases to 35 points or more.

By displaying the display field 305 of the screen 310, the engineer or the like can easily recognize not only actions of browsing users estimated to contribute to conversion but also differences between the actions in the degree of contribution to conversion improvement.

As a result, the engineer or the like can efficiently perform actions relating to conversion improvement and operations relating to modification of webpage XX and the like compared to when a system that outputs only user actions estimated to contribute to conversion is used.

### Presentation of Measures to Contribute to Conversion Improvement

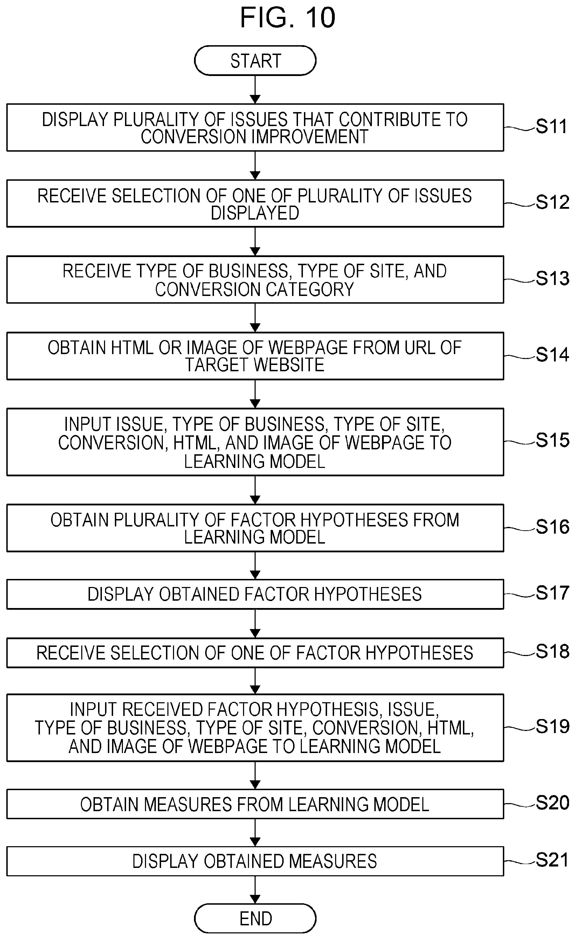

Fig. 10 is a flowchart illustrating an example of a processing operation performed until measures to improve parameters that contribute to conversion improvement are presented.

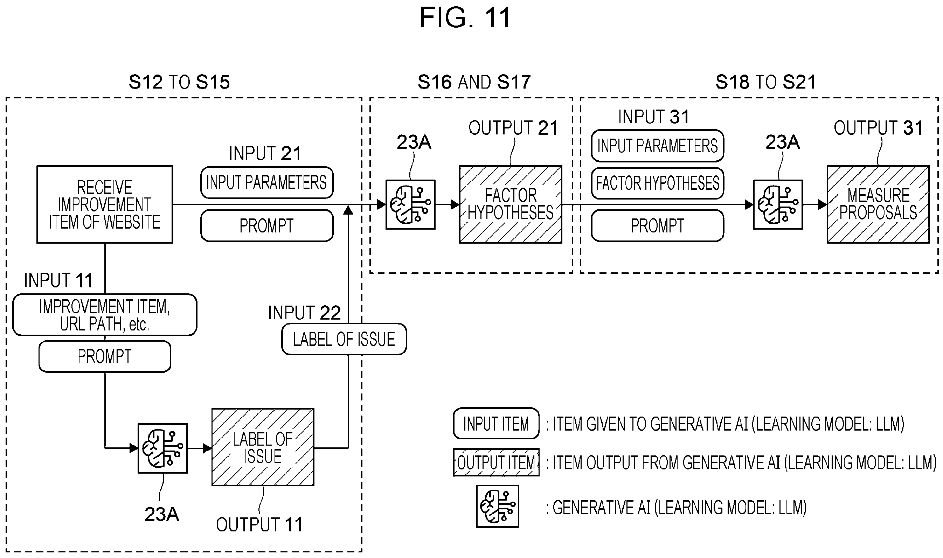

Fig. 11 is a diagram illustrating a relationship between the processing operation illustrated in Fig. 10 and inputs and outputs of the learning model 23A (see Fig. 2).

### Step 11

The processor 21 displays a plurality of issues that contributes to conversion improvement.

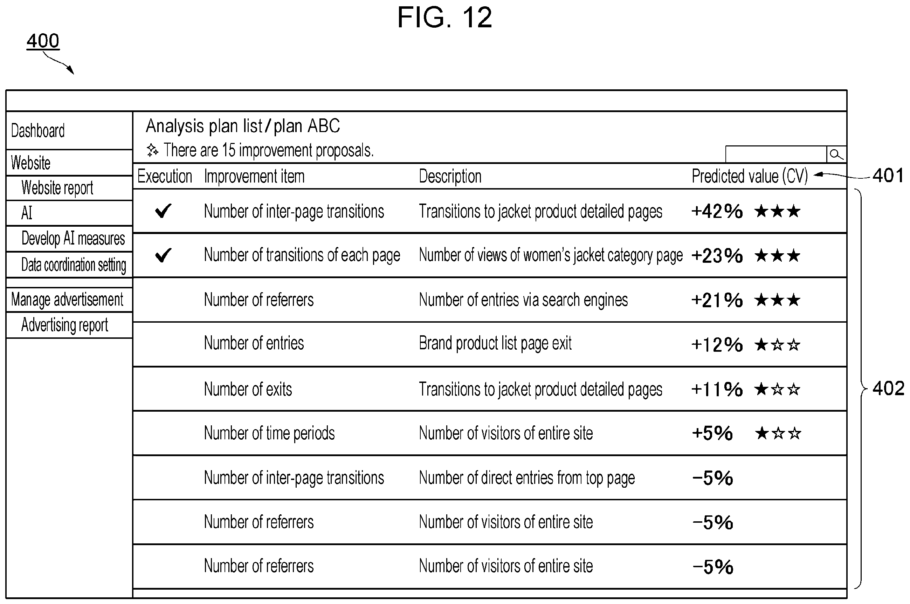

Fig. 12 is a diagram illustrating an example of a screen 400 for displaying the issues (i.e., actions) that contribute to conversion improvement.

The screen 400 illustrated in Fig. 12 includes an item field 401 and an information field 402.

The item field 401 includes "execution", "improvement item", "description", and "predicted value (CV)".

"Execution" indicates whether each action has been performed. In Fig. 12, actions in first and second rows have been performed.

"Improvement item" indicates an issue that contributes to conversion improvement.

"Description" indicates description of the issue.

"Predicted value (CV)" indicates a predicted value of conversion in a case where the issue is improved. For example, the corresponding value in the display field 305 (see Fig. 9) is displayed.

The screen 400 illustrated in Fig. 12 indicates, for example, that the predicted value of conversion improves by 42% by improving "number of inter-page transitions" described as "transitions to jacket product detailed pages".

In Fig. 12, there are three issues whose predicted values of conversion are negative.

### Step 12

The processor 21 receives selection of one of the plurality of issues displayed.

For example, in the screen 400 (see Fig. 12), "number of inter-page transitions" described as "transitions to jacket product detailed pages" is selected.

### Step 13

Next, the processor 21 receives a type of business, a type of site, and a conversion category. In other words, the processor 21 collects information to be incorporated into a prompt to be input to the learning model 23A (see Fig. 2).

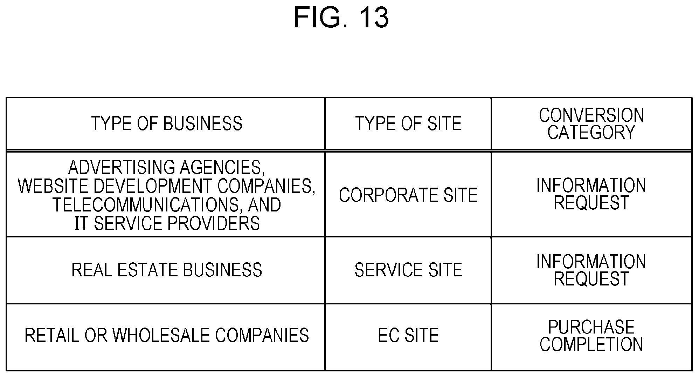

Fig. 13 is a diagram illustrating an example of types of business, types of site, and conversion categories.

The types of business include, for example, "advertising agencies and website development companies", "telecommunications and IT service providers", "real estate business", and "retail or wholesale companies".

The types of site include, for example, a corporate site, a service site, and an electronic commerce (EC) site.

The conversion categories include, for example, information request and purchase completion.

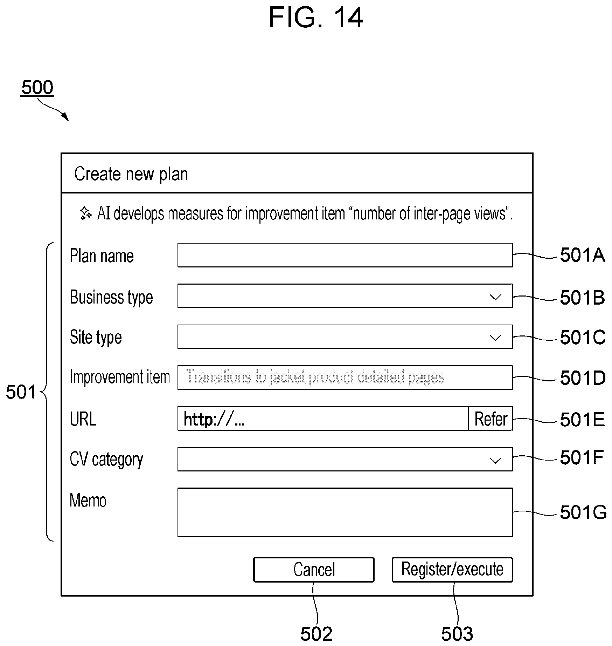

Fig. 14 is a diagram illustrating an example of a screen 500 used to input information to be used to generate a prompt. The screen 500 is displayed by selecting an improvement item (i.e., conversion) on the screen 400 (see Fig. 12).

The screen 500 includes an input field 501, a "cancel" button 502, and a "register/execute" button 503.

The input field 501 illustrated in Fig. 14 includes a "plan name" field 501A, a "business type" field 501B, a "site type" field 501C, an "improvement item" field 501D, a "URL" field 501E, a "CV category" field 501F, and a "memo" field 501G.

In the "plan name" field 501A, for example, a current operation name is input. The site administrator can freely input an operation name.

In the "business type" field 501B, one of candidates for the type of business prepared in a pull-down menu can be selected. In the present exemplary embodiment, content to be displayed in the pull-down menu is automatically determined on the basis of information regarding the website.

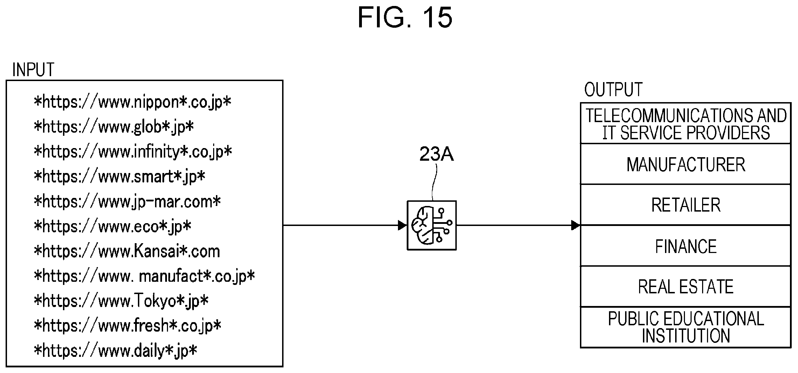

Fig. 15 is a diagram illustrating an example of generated candidates for the type of business displayed in the pull-down menu according to a type of website.

When a URL of the website is input to the learning model 23A, one or a plurality of related candidates for the type of business is output from among six types of business illustrated in Fig. 15. The URL of the website is an example of identification information for identifying the website.

With this mechanism, candidates to be presented to the site administrator can be narrowed down. Unlike when the site administrator can freely input a type of business, prompt injection by malicious site administrators can be prevented.

In the "site type" field 501C, one of candidate sites prepared in a pull-down menu can be selected. As for the type of site, too, content to be displayed in the pull-down menu is automatically determined on the basis of the information regarding the website.

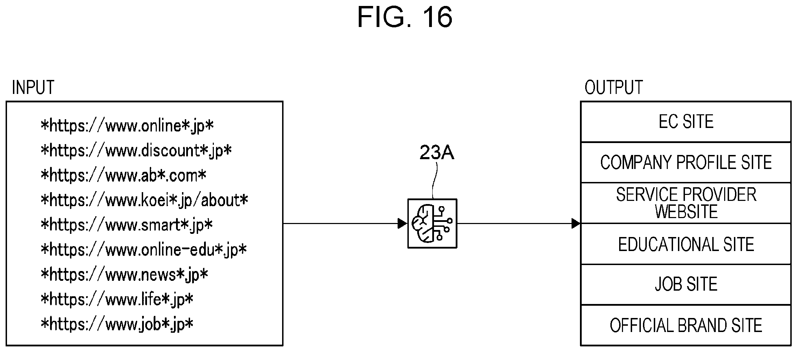

Fig. 16 is a diagram illustrating an example of generated candidates for a site displayed in the pull-down menu according to the type of website.

When the URL of the website is input to the learning model 23A, one or a plurality of related candidates for the site is output from among six sites illustrated in Fig. 16.

With this mechanism, candidates to be presented to the site administrator can be narrowed down. Unlike when the site administrator can freely input a site type, prompt injection by malicious site administrators can be prevented.

In the "improvement item" field 501D, information regarding an improvement item selected on the screen 400 (see Fig. 12) is displayed. In Fig. 14, "transitions to jacket product detailed pages" is displayed in the "improvement item" field 501D. The screen 500 does not accept a change to the improvement item. "Transitions to jacket product detailed pages", therefore, is grayed out.

In the "URL" field 501E, a URL for identifying a website or a webpage whose conversion is to be improved is input. In Fig. 14, one of candidates for the URL presented by using a "refer" button can be selected. A URL, however, may be directly input, instead.

In the "CV category" field 501F, one of candidates for the CV (i.e., conversion) category prepared in a pull-down menu can be selected. As for the CV category, too, content to be displayed in the pull-down menu is automatically determined on the basis of the information regarding the website and the type of site.

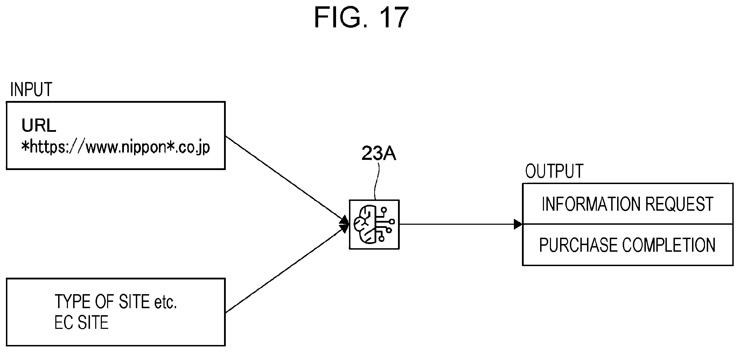

Fig. 17 is a diagram illustrating an example of generated candidates for the CV category displayed in the pull-down menu.

In Fig. 17, a URL of a website, a type of site, and the like are input to the learning model 23A, and related candidates for the CV category are output. Here, the URL is a URL input in the "URL" field 501E, and the type of site is a type of site input in the "site type" field 501C.

In the "memo" field 501G, for example, variables and the like for controlling outputs of the learning model 23A (see Fig. 2) are described. The variables and the like include, for example, the number of letters to be used in an output format of factor hypotheses to be output from the learning model 23A.

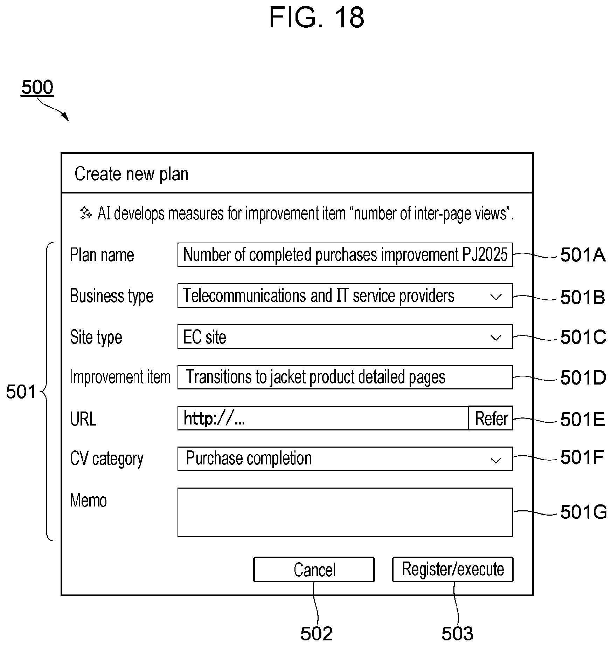

Fig. 18 is a diagram illustrating an example of input information used to generate a prompt. Parts of Fig. 18 corresponding to parts of Fig. 14 are given corresponding reference signs.

In Fig. 18, "number of completed purchases improvement PJ 2025" is input in the "plan name" field 501A. "Telecommunications and IT service providers" is input in the "business type" field 501B. "EC site" is input in the "site type" field 501C. "Transitions to jacket product detailed pages" is input in the "improvement item" field 501D. A target URL is input in the "URL" field 501E. "Purchase completion" is input in the "CV category" field 501F. The "memo" field 501G is blank.

When the inputs on the screen 500 illustrated in Fig. 18 are confirmed, the processor 21 generates a prompt of "input 21" (see Fig. 11).

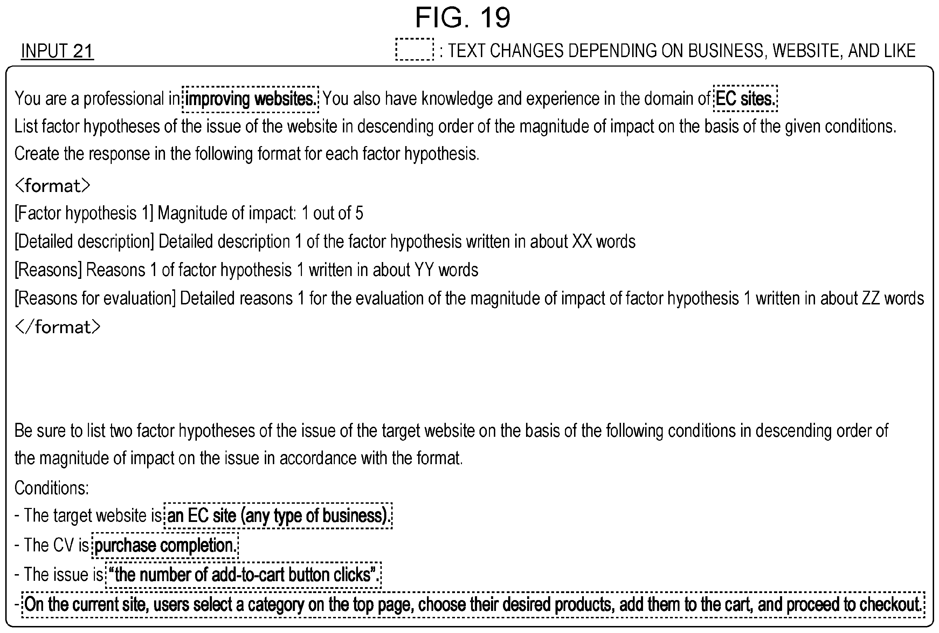

Fig. 19 is a diagram illustrating an example of a prompt used as "input 21".

A format of the prompt illustrated in Fig. 19 is prepared in association with a combination of a type of business and a type of site. The format is an example of a template.

In the format, "XX", "YY", and "ZZ" are variables for controlling an output.

Parts of the format surrounded by broken lines are switched in accordance with content of the "business type" field 501B and the "site type" field 501C (see Fig. 18).

For example, a term "EC sites" is input in a top row and a fourth row from a bottom.

In CV (i.e., conversion) in a third row from the bottom of the prompt, "purchase completion" input in the "CV category" field 501F is input.

In a bottom row of the prompt, information regarding a user flow in the website is input.

In Fig. 19, there is a description, "On the current site, users select a category on the top page, choose their desired products, add them to the cart, and proceed to checkout".

In a second row from the bottom of the prompt, information indicating that the issue is "the number of add-to-cart button clicks" is input.

"The number of add-to-cart button clicks" here is a natural language description of an action that affects conversion improvement (e.g., user flow).

For example, the top N actions extracted in step 4 (see Fig. 5) are written in JavaScript Object Notation (JSON) format. The JSON format is effective for data exchange between programming languages.

The learning model 23A, however, is a large language model (LLM). The learning model 23A, therefore, cannot understand character strings in the JSON format. That is, the learning model 23A cannot recognize issues (or actions) that contribute to conversion improvement written in the JSON format.

The processor 21, therefore, performs processing (hereinafter referred to as "labeling") for converting character strings written in the JSON format into natural language descriptions.

Character strings obtained by labeling will be referred to as labels hereinafter. The learning model 23A can interpret labels in a natural language format. Since issues can be understood, accuracy of estimating factors and measures improves.

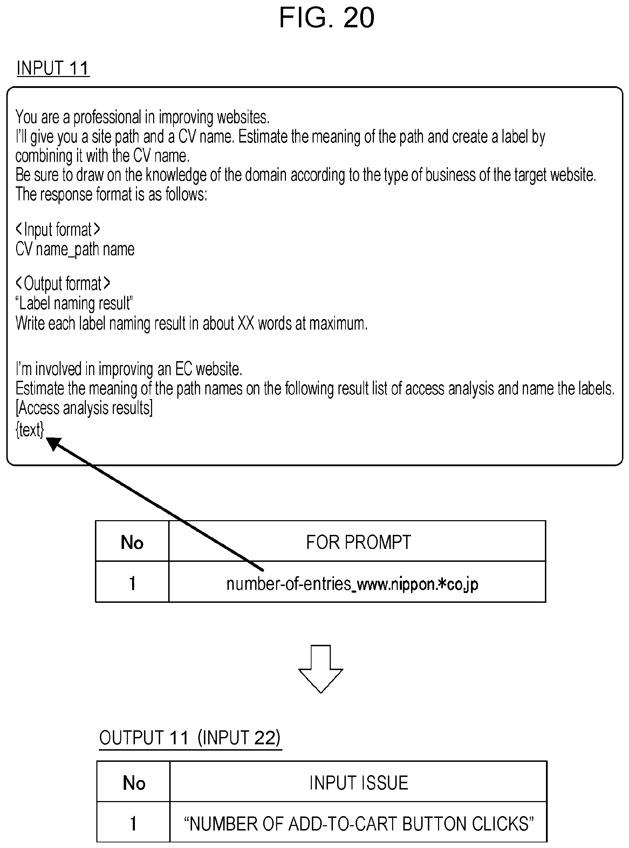

Fig. 20 is a diagram illustrating an example of a prompt used to generate a label of an issue.

"Input 11" illustrated in Fig. 20 is an example of a format of a prompt used to generate a label. The format includes an "input format" field and an "output format" field.

An "access analysis result" field is provided with a "text" field. In the "text" field, for example, a highest one of the top N actions (e.g., user flow) extracted in step 4 (see Fig. 5) is input.

"Output 11" (i.e., input 22) is obtained by giving the prompt indicated by "input 11" to the learning model 23A (see Fig. 2).

In Fig. 20, a label "the number of add-to-cart button clicks" is attached to a URL indicating the user flow.

This label is input in a second row from the bottom of the prompt illustrated in Fig. 19.

### Step 14

The processor 21 obtains HTML or an image of a webpage from the URL of the target website. The URL, the HTML, and the image of the webpage are examples of information for identifying a website. In addition, the URL, the HTML, and the image of the webpage are examples of input parameters in "input 21" (see Fig. 11).

As a result of step 14, preparation of "input 21" (see Fig. 11) is completed.

### Step 15

The processor 21 inputs the issue, the type of business, the type of site, the conversion, the HTML, and the image of the webpage to the learning model 23A. These inputs correspond to "input 21" described above.

### Step 16

The processor 21 obtains a plurality of factor hypotheses from the learning model 23A. The factor hypotheses are factors of the issue (i.e., action) that contributes to conversion improvement estimated by the learning model 23A. The factor hypotheses here correspond to "output 21" (see Fig. 11) of the learning model 23A.

When only one factor hypothesis is output from the learning model 23A, the processor 21 obtains the factor hypothesis.

### Step 17

The processor 21 displays the obtained factor hypotheses.

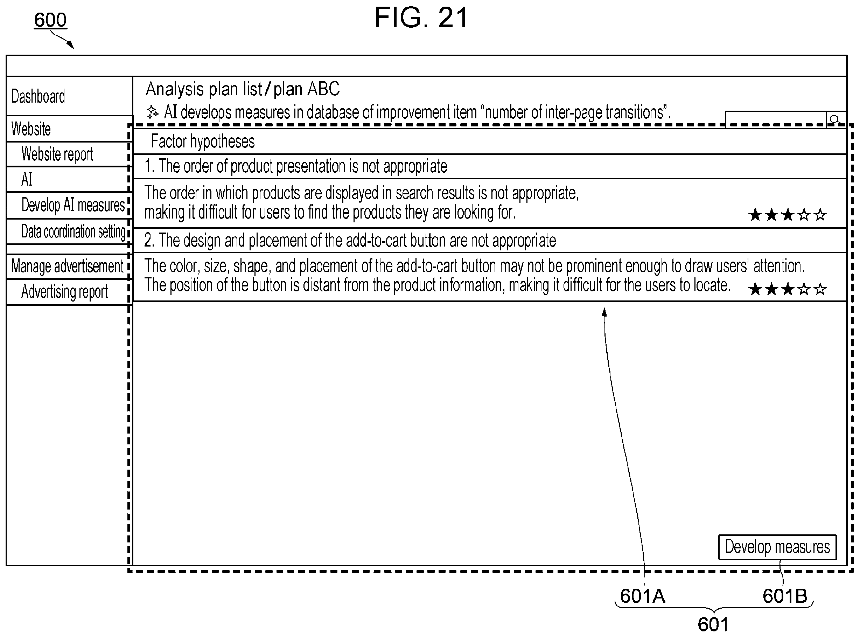

Fig. 21 is a diagram illustrating an example of a screen 600 displaying factor hypotheses of an issue (i.e., action) that contributes to conversion improvement.

Factor hypotheses 601 on the screen 600 illustrated in Fig. 21 include a content field 601A and a "develop measures" button 601B. When the "develop measures" button 601B is used with one of the factor hypotheses shown in the content field 601A selected, the selected factor hypothesis and the like are input to the learning model 23A to present measure proposals.

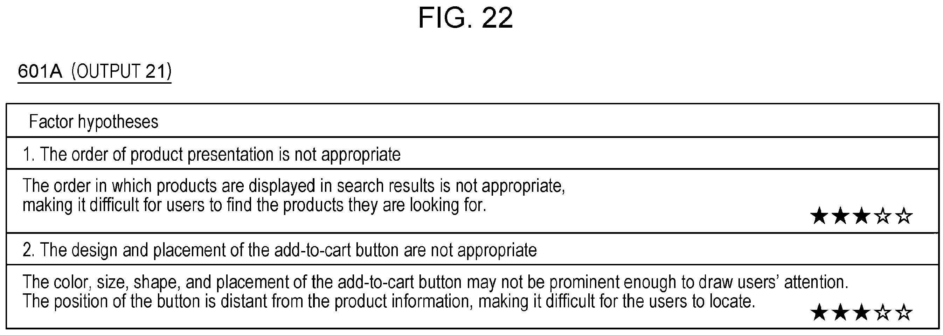

Fig. 22 is a diagram illustrating a specific example of the content field 601A (see Fig. 21).

In the content field 601A illustrated in Fig. 22, two factors are described.

Specifically, the two factors are "the order of product presentation is not appropriate" and "the design and placement of the add-to-cart button are not appropriate". The number of factors to be displayed is not limited to two, and may be one, or three or more, instead.

A detailed description is provided for each factor. The detailed description is used to understand the corresponding factor. For example, a description, "The order in which products are displayed in search results is not optimal, making it difficult for users to find the products they are looking for", is provided for the first factor.

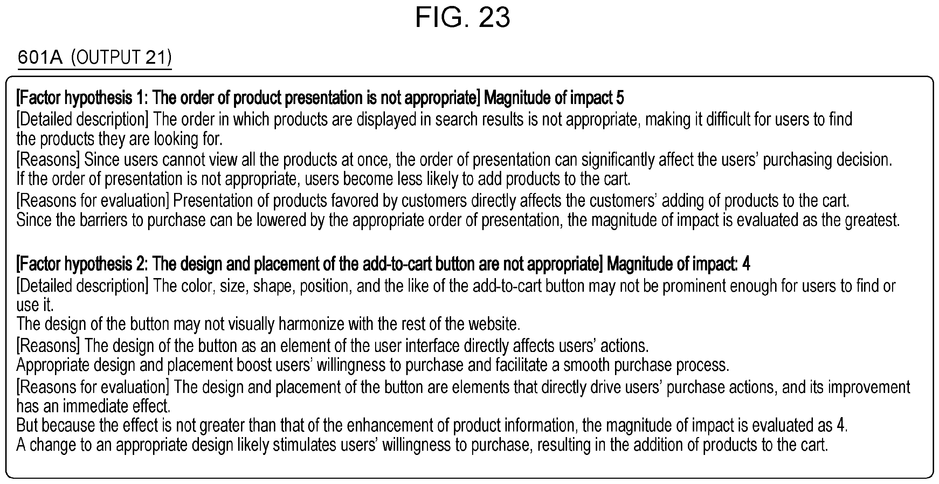

Fig. 23 is a diagram illustrating another specific example of the content field 601A (see Fig. 21).

In the content field 601A illustrated in Fig. 23, too, two factors are described. The two factors correspond to the two factors illustrated in Fig. 22.

The content field 601A illustrated in Fig. 23 includes information indicating magnitude of impact, information indicating "detailed description", information indicating "reasons", and information indicating "reasons for evaluation".

That is, the content field 601A illustrated in Fig. 23 includes information regarding the magnitude of impact on users' action that contributes to conversion improvement. This information serves as an indicator when a factor is selected.

Content of "detailed description" is, as with the content field 601A illustrated in Fig. 22, a detailed description of the presented factor. The descriptions are partly different between Figs. 23 and 22, but the differences are ones as display examples.

In "reasons", reasons for the selection of a factor are described. In "reasons for evaluation", detailed reasons for the evaluation of the magnitude of impact are described.

This information helps the site administrator select a factor with which to develop measures.

"Factor hypotheses", "magnitude of impact", "detailed description", "reasons", and "reasons for evaluation" are all specified in the prompt indicated by "input 21" (see Fig. 19).

### Step 18

On the screen 600 (see Fig. 21), the processor 21 receives selection of one of the factor hypotheses. The reception of the selection is confirmed by using the "develop measures" button 601B (see Fig. 21).

### Step 19

The processor 21 inputs the received factor hypothesis, issue, type of business, type of site, conversion, HTML, and image of the webpage to the learning model 23A (see Fig. 2). The inputs here are included in "input 31" (see Fig. 11).

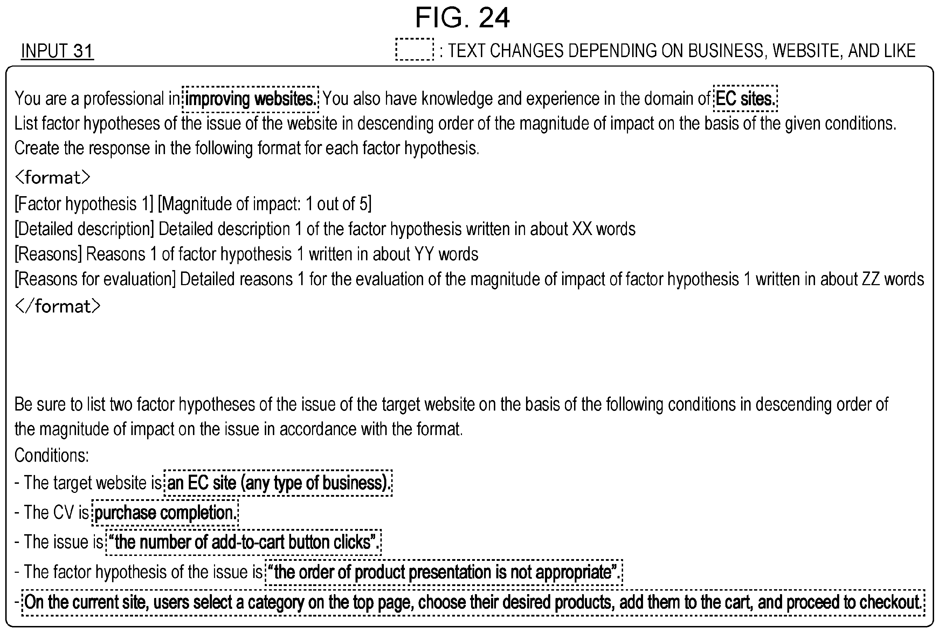

Fig. 24 is a diagram illustrating an example of a prompt used as "input 31".

A format of the prompt illustrated in Fig. 24 is prepared in advance. Parts "XX", "YY", and "ZZ" are variables for controlling outputs.

Parts of the format surrounded by broken lines are switched in accordance with the content input in the "site type" field 501C, the "improvement item" field 501D, and the "CV category" field 501F (see Fig. 18) and the content of the factor hypothesis selected on the screen 600 (see Fig. 21).

In Fig. 24, for example, "the design and placement of the add-to-cart button are not appropriate", whose magnitude of impact on users' action that contributes to conversion improvement is the second greatest, is input as the factor hypothesis.

### Step 20

The processor 21 obtains measures from the learning model. One or a plurality of measures is obtained. The measures include positions and content of changes in the website or the like in order to achieve conversion improvement.

### Step 21

The processor 21 displays the obtained measures.

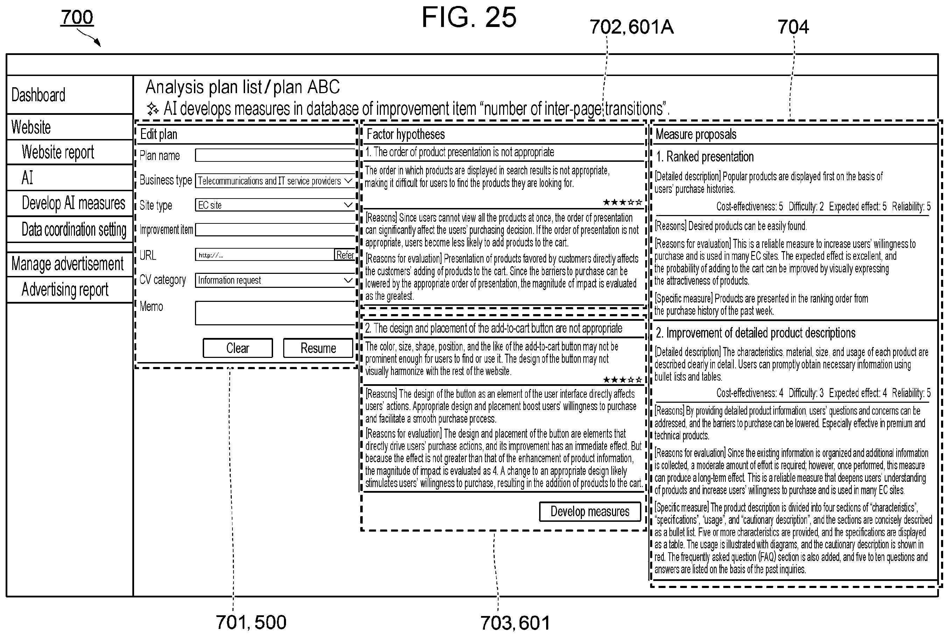

Fig. 25 is a diagram illustrating an example of a screen 700 displaying measures to improve the action (i.e., parameter) that contributes to conversion improvement.

The screen 700 illustrated in Fig. 25 includes a display field 701 of the information used to extract the factor hypotheses, an information field 702 of the factor hypotheses used to present the measures, an edit field 703 of the factor hypotheses, and measure proposals 704.

The display field 701 displays setting information regarding the screen 500 (see Fig. 18) corresponding to step 13 (see Fig. 10). The site administrator can check and edit the information set on the screen 500 (see Fig. 18) using the display field 701.

The information field 702 displays the factor hypothesis selected on the screen 600 (see Fig. 21) corresponding to step 18 (see Fig. 10).

The edit field 703, too, displays the factor hypothesis that has not been selected on the screen 600 (see Fig. 21) corresponding to step 18 (see Fig. 10). The site administrator can request a change to the other factor hypothesis using the edit field 703.

As the measure proposals 704, candidates for a measure output from the learning model 23A are displayed. In Fig. 25, two of the output candidates for the measure are displayed due to display size limitations. The other candidates can be displayed by using a scroll bar.

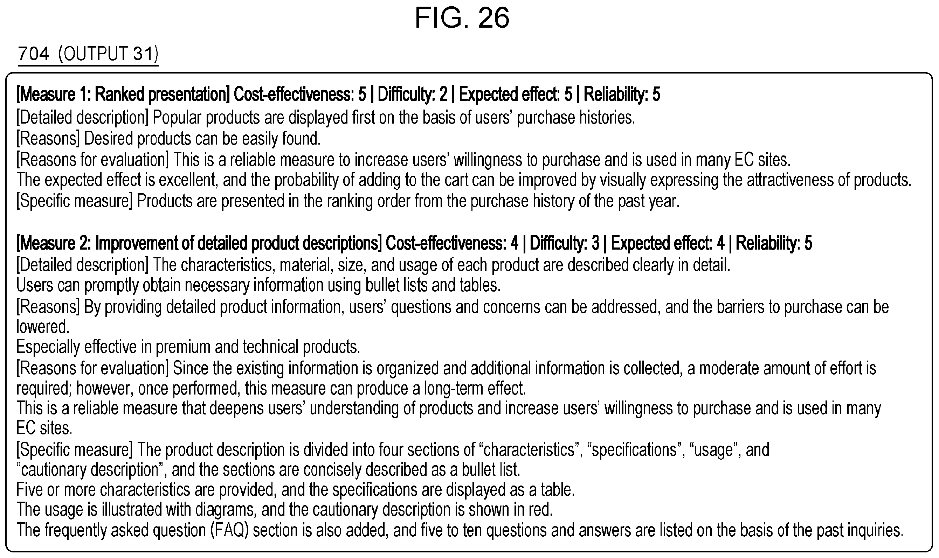

Fig. 26 is a diagram illustrating an example of the output measure proposals 704. Parts of Fig. 26 corresponding to parts of Fig. 25 are given corresponding reference signs. The measure proposals 704 illustrated in Fig. 26 correspond to "output 31" (see Fig. 11).

The measure proposals 704 illustrated in Fig. 26 include [Measure 1] and [Measure 2]. The output of these two measures is specified in the prompt illustrated in Fig. 24.

The two measures illustrated in Fig. 26 include "ranked presentation" and "improvement of detailed product descriptions".

Each measure also includes evaluation values of "cost-effectiveness", "difficulty", "expected effect", and "reliability". These evaluation values are examples of an evaluation result.

In the case of [Measure 1], for example, the evaluation values of "cost-effectiveness", "difficulty", "expected effect", and "reliability" are 5, 5, 2, and 5, respectively.

These evaluation values are an example of information for helping the site administrator select a measure.

Each indicator includes "detailed description" of the measure indicated by a label (or a summary of content), "reasons" for the presentation of the measure, "reasons for evaluation (i.e., evaluation values)", and "specific measure". Among these, "detailed description", "reasons", and "reasons for evaluation" are considered when the site administrator selects a measure. The content of "specific measure" helps the site administrator easily envision a measure to be employed.

### Summary

The information processing system 1 (see Fig. 1) is not limited to the presentation of parameters that contribute to conversion improvement relating to a website, and is capable of providing the measure proposals 704 (see Fig. 26) for improving the presented parameters. It is therefore possible to reduce time taken for the site administrator to recognize improvement points of the website and examine measures.

### Other Exemplary Embodiments

(1) Although an exemplary embodiment of the present disclosure has been described, the technical scope of the present disclosure is not limited to that described in the exemplary embodiment. It is obvious from the description in the claims that the technical scope of the present disclosure also includes various modifications or improvements of the above-described exemplary embodiment.
(2) In the above-described exemplary embodiment, a mechanism for presenting factor hypotheses affecting user actions that contribute to conversion improvement to the site administrator and measures against one of the factor hypotheses selected by the site administrator is employed.
   A mechanism for presenting measures to the site administrator without presenting factor hypotheses to the site administrator, however, may be employed, instead. For example, some site administrators think that factor hypotheses used to generate recommended measure proposals are unnecessary as long as the measure proposals are presented. Even in this case, as indicated by the screen 700 (see Fig. 25), for example, the factor hypotheses used to generate the measure proposals can be checked and changed by including not only the measure proposals 704 (see Fig. 25) but also the information field 702 (see Fig. 25) of the factor hypotheses and the like.
(3) In the above-described exemplary embodiment, the prompt for generating measure proposals does not include HTML (data structure of a webpage) and a URL image (i.e., website image). When such information is included in the prompt, however, accuracy of measure proposals output from the learning model 23A (see Fig. 2) can be increased. This is because a comprehension level of the learning model 23A regarding specific content of a website requiring conversion improvement increases.

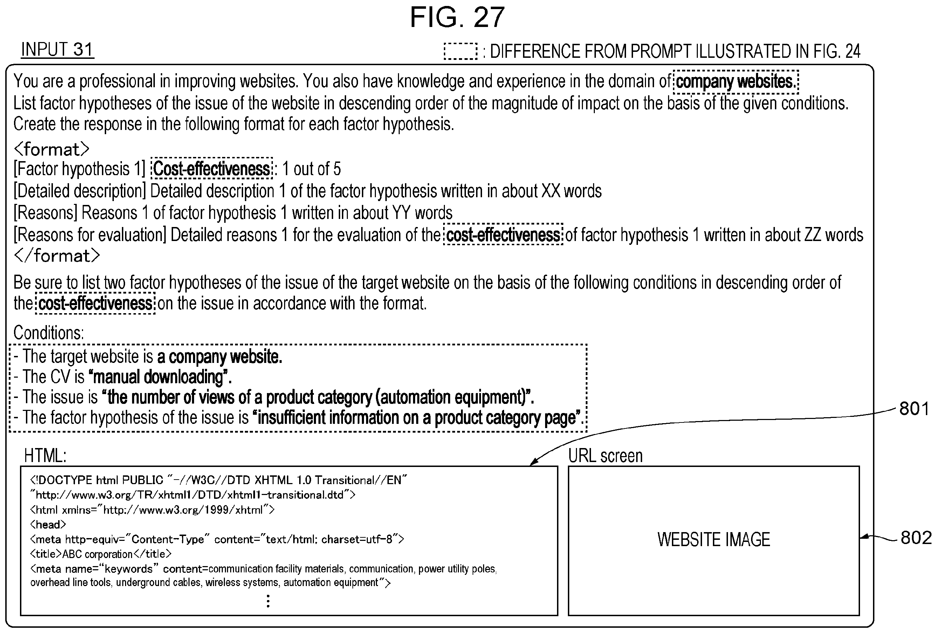

Fig. 27 is a diagram illustrating another example of the prompt used as "input 31". Parts of Fig. 27 corresponding to parts of Fig. 24 are given corresponding reference signs.

In the prompt illustrated in Fig. 27, an HTML description field 801 and a URL image field 802 are added.

In the prompt illustrated in Fig. 27, part of knowledge expected from the learning model 23A and a subset of evaluation items of measure proposals are different. This is because of changes in the format due to a difference in the type of site.

First, in the prompt illustrated in Fig. 27, the expected knowledge has been changed from "EC sites" to "company websites".

The target website has been changed from "EC site (any type of business)" to "company website". Here, "company" refers to, for example, a company to which the site administrator belongs.

The conversion has been changed from "purchase completion" to "manual downloading".

The action (i.e., issue) that contributes to conversion improvement has been changed from "the number of add-to-cart button clicks" to "the number of views of a product category (automation equipment)".

The factor hypothesis relating to the issue has been changed from "insufficient information on product detailed pages" to "insufficient information on a product category page".

In the prompt illustrated in Fig. 27, the description about the user flow in the webpages included in the prompt illustrated in Fig. 24 has been removed.

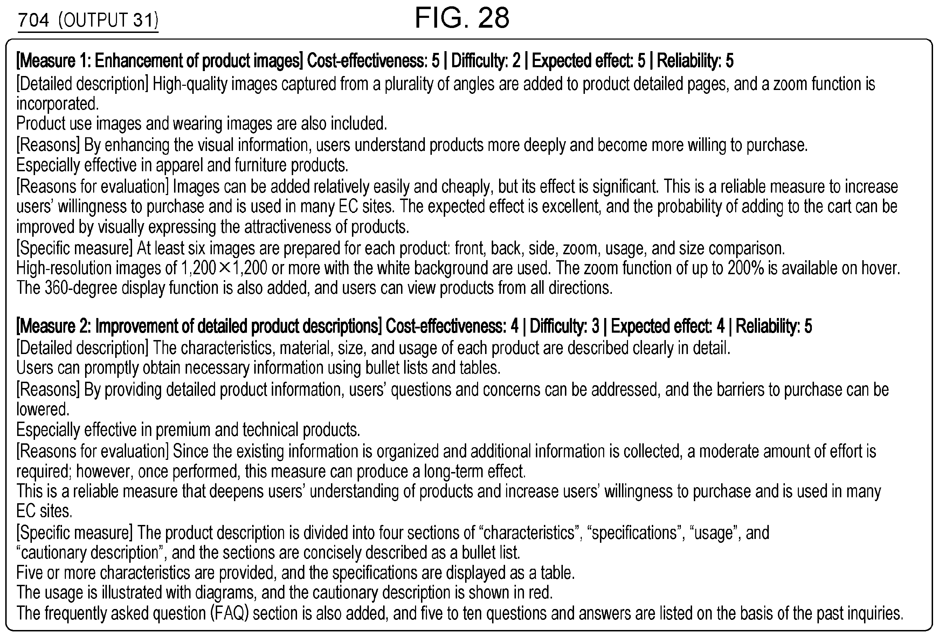

Fig. 28 is a diagram illustrating another example of the output measure proposals. Parts of Fig. 28 corresponding to parts of Fig. 26 are given corresponding reference signs. The measure proposals illustrated in Fig. 28 correspond to "output 31" (see Fig. 11).

The two measure proposals illustrated in Fig. 28 are "enhancement of product images" and "improvement of detailed product descriptions".

(4) The above-described exemplary embodiment assumes a case where a verification result of an action history of web users has been obtained in the JSON format. In Fig. 11, therefore, a label of an action (issue) described in the JSON format is generated and inserted into the prompt for generating factor hypotheses.

In some cases, however, a verification result of an action history of web users is not used. In this case, the processing operation described with reference to Fig. 11 is simplified.

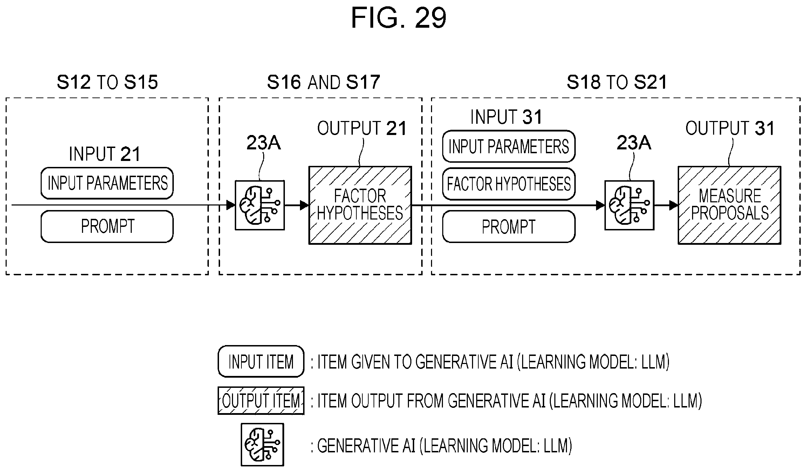

Fig. 29 is a diagram illustrating another relationship between the processing operation illustrated in Fig. 10 and the inputs and outputs of the learning model 23A (see Fig. 2). Parts of Fig. 29 corresponding to parts of Fig. 11 are given corresponding reference signs.

Because the operation does not start with the reception of an improvement item (i.e., an action that contributes to conversion improvement) of the website in Fig. 29, the processing operation corresponding to steps 12 to 15 is simplified.

In this case, the site administrator generates input parameters and a prompt on the screen 500. In this case, the improvement item and the like have not been determined. The site administrator, therefore, inputs the improvement item and the like.

(5) In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(6) The present disclosure can also be applied to a program or a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including a processor configured to obtain identification information for identifying a website and a parameter relating to the website, and inputting input information including the identification information and the parameter to a learning model and presenting a measure to improve the parameter, the measure being output from the learning model.
(((2))) The information processing system according to (((1))), in which the processor is configured to obtain information regarding conversion in the website, and the input information further includes the obtained information regarding the conversion.
(((3))) The information processing system according to (((2))), in which the input information includes information regarding a user flow for a web user who is visiting the website to reach a specific item in the website relating to the conversion.
(((4))) The information processing system according to (((3))), in which the processor is configured to obtain an action history of the web user who is visiting the website, and the information regarding the user flow is extracted on a basis of the action history.
(((5))) The information processing system according to any one of (((1))) to (((4))), in which the processor is configured to obtain an action history of a web user who is visiting the website and conversion in the website, obtain, on a basis of the action history and the conversion, a parameter more highly correlated with the conversion than other parameters among a plurality of the parameters relating to the website, and include the obtained parameter in the input information.
(((6))) The information processing system according to (((5))), in which the processor is configured to obtain, on a basis of the action history and the conversion, a plurality of parameters more highly correlated with the conversion than other parameters among the plurality of parameters relating to the website, present the plurality of obtained parameters, and include a selected one of the plurality of obtained parameters in the input information.
(((7))) The information processing system according to (((1))), in which the input information further includes information regarding a type of website.
(((8))) The information processing system according to (((7))), in which the input information further includes information regarding a type of business relating to the website.
(((9))) The information processing system according to (((8))), in which the information regarding the type of information and the information regarding the type of business are changed in accordance with the obtained identification information.
(((10))) The information processing system according to any one of (((1))) to (((9))), in which the learning model is a language model, and the processor is configured to input a prompt including the input information to the language model and present the measure output from the language model.
(((11))) The information processing system according to (((10))), in which the processor is configured to generate the prompt using, among a plurality of templates stored in a memory, a template selected on a basis of the input information.
(((12))) The information processing system according to (((10))), in which the input information includes information that is a natural language description of content of the parameter.
(((13))) The information processing system according to any one of (((1))) to (((12))), in which the processor is configured to input the input information to the learning model and present a factor of an issue that contributes to improvement of the parameter, the factor being output from the learning model.
(((14))) The information processing system according to (((13))), in which the processor is configured to present a plurality of the factors output from the learning model, and present the measure obtained by including, among the plurality of presented factors, a factor selected by a user in the input information and inputting the input information to the learning model.
(((15))) The information processing system according to (((13))), in which the processor is configured to present a plurality of the measures for the factor.
(((16))) The information processing system according to any one of (((1))) to (((15))), in which the processor is configured to present an evaluation result of the measure while associating the evaluation result with the measure.
(((17))) A program causing a computer to execute a process including obtaining identification information for identifying a website and a parameter relating to the website, and inputting input information including the identification information and the parameter to a learning model and presenting a measure to improve the parameter, the measure being output from the learning model.

With the information processing system according to (((1))), measures to improve proposed parameters that contribute to conversion improvement relating to a website can be provided unlike when only the parameters are proposed.

With the information processing system according to (((2))), accuracy of measures to be presented can be increased.

With the information processing system according to (((3))), the accuracy of measures to be presented can be increased.

With the information processing system according to (((4))), measures to improve reaching to a specific item in a website can be presented.

With the information processing system according to (((5))), measures likely to improve reaching to a specific item in a website can be presented.

With the information processing system according to (((6))), measures according to a parameter selected by a user can be presented.

With the information processing system according to (((7))), measures to be output can reflect information regarding a type of website.

With the information processing system according to (((8))), measures to be output can reflect information regarding a type of business of a website.

With the information processing system according to (((9))), prompt injection by malicious users can be prevented.

With the information processing system according to (((10))), measures can be articulated and presented.

With the information processing system according to (((11))), generation of a prompt can be automated.

With the information processing system according to (((12))), the accuracy of measures to be presented can be increased.

With the information processing system according to (((13))), a user can check factors.

With the information processing system according to (((14))), measures can be presented for a factor selected by a user.

With the information processing system according to (((15))), a plurality of measures can be presented for one factor.

With the information processing system according to (((16))), not only measures but also evaluation thereof can be checked.

With the program according to (((17))), measures to improve proposed parameters that contribute to conversion improvement relating to a website can be provided unlike when only the parameters are proposed.

## Claims

1. An information processing system comprising:
a processor configured to:
obtain identification information for identifying a website and a parameter relating to the website; and
inputting input information including the identification information and the parameter to a learning model and presenting a measure to improve the parameter, the measure being output from the learning model.

2. The information processing system according to claim 1,
wherein the processor is configured to obtain information regarding conversion in the website, and
wherein the input information further includes the obtained information regarding the conversion.

3. The information processing system according to claim 2,
wherein the input information includes information regarding a user flow for a web user who is visiting the website to reach a specific item in the website relating to the conversion.

4. The information processing system according to claim 3,
wherein the processor is configured to obtain an action history of the web user who is visiting the website, and
wherein the information regarding the user flow is extracted on a basis of the action history.

5. The information processing system according to any one of claims 1 to 4,
wherein the processor is configured to:
obtain an action history of a web user who is visiting the website and conversion in the website;
obtain, on a basis of the action history and the conversion, a parameter more highly correlated with the conversion than other parameters among a plurality of the parameters relating to the website; and
include the obtained parameter in the input information.

6. The information processing system according to claim 5,
wherein the processor is configured to:
obtain, on a basis of the action history and the conversion, a plurality of parameters more highly correlated with the conversion than other parameters among the plurality of parameters relating to the website;
present the plurality of obtained parameters; and
include a selected one of the plurality of obtained parameters in the input information.

7. The information processing system according to claim 1,
wherein the input information further includes information regarding a type of website.

8. The information processing system according to claim 7,
wherein the input information further includes information regarding a type of business relating to the website.

9. The information processing system according to claim 8,
wherein the information regarding the type of information and the information regarding the type of business are changed in accordance with the obtained identification information.

10. The information processing system according to any one of claims 1 to 9,
wherein the learning model is a language model, and
wherein the processor is configured to input a prompt including the input information to the language model and present the measure output from the language model.

11. The information processing system according to claim 10,
wherein the processor is configured to generate the prompt using, among a plurality of templates stored in a memory, a template selected on a basis of the input information.

12. The information processing system according to any one of claims 1 to 11,
wherein the processor is configured to input the input information to the learning model and present a factor of an issue that contributes to improvement of the parameter, the factor being output from the learning model.

13. The information processing system according to claim 12,
wherein the processor is configured to:
present a plurality of the factors output from the learning model; and
present the measure obtained by including, among the plurality of presented factors, a factor selected by a user in the input information and inputting the input information to the learning model.

14. The information processing system according to claim 12,
wherein the processor is configured to present a plurality of the measures for the factor.

15. A program causing a computer to execute a process comprising:
obtaining identification information for identifying a website and a parameter relating to the website; and
inputting input information including the identification information and the parameter to a learning model and presenting a measure to improve the parameter, the measure being output from the learning model.
